**Europäisches Patentamt**

**European Patent Office**

**Office européen des brevets**

(19)

(11) Veröffentlichungsnummer: **0 105 025**
**B1**

(12) # EUROPÄISCHE PATENTSCHRIFT

(45) Veröffentlichungstag der Patentschrift:
**29.04.87**

(51) Int. Cl.⁴: **C 01 F 7/44,** C 04 B 35/10

(21) Anmeldenummer: **83810350.5**

(22) Anmeldetag: **05.08.83**

(54) **Verfahren zur Herstellung von kristalliner Tonerde.**

(30) Priorität: **24.08.82 CH 5029/82**

(43) Veröffentlichungstag der Anmeldung:
**04.04.84 Patentblatt 84/14**

(45) Bekanntmachung des Hinweises auf die Patenterteilung:
**29.04.87 Patentblatt 87/18**

(84) Benannte Vertragsstaaten:
**AT CH DE FR GB IT LI NL SE**

(56) Entgegenhaltungen:
**EP-A-0 048 691**
**DE-B-1 159 418**
**FR-A-2 036 842**

**Die Akte enthält technische Angaben, die nach
dem Eingang der Anmeldung eingereicht wurden
und die nicht in dieser Patentschrift enthalten sind.**

(73) Patentinhaber: **SCHWEIZERISCHE ALUMINIUM
AG, CH- 3965 Chippis (CH)**

(72) Erfinder: **Mizrah, Tiberiu, Hohlenbaumstrasse 90,
CH- 8200 Schaffhausen (CH)**
Erfinder: **Schepers, Bernhard, Peter Roseggerweg
6, D-6720 Speyer (DE)**
Erfinder: **Schröder, Bernd, Spee- Strasse 9, D-5000
Köln (DE)**

## Beschreibung

Die Erfindung betrifft ein Verfahren zur Herstellung kristalliner Tonerde, $\alpha$-$Al_2O_3$, durch Kalzination von Aluminiumhydroxid, $Al(OH)_3$, bis zu einer über der Umwandlung zu $\alpha$-$Al_2O_3$ liegenden Temperatur unter Zugabe von ammonium-, bor- und/oder fluorhaltigen Verbindungen als Mineralisatoren.

Tonerde wird grosstechnisch üblicherweise nach dem Bayer-Verfahren produziert. Durch Aufschluss von Bauxit in Natronlauge und anschliessende Kristallisation wird Aluminiumhydroxid in Form von Agglomeraten der Grösse bis um 100 μm erhalten. Durch Kalzination in Dreh- oder Wirbelschichtöfen wird das Aluminiumhydroxid in Tonerde überführt. Dabei strebt man meist eine vollständige Umwandlung zum $\alpha$-Aluminiumoxid an, was ab etwa 1200°C und darüber sicher der Fall ist. Durch Zugabe von sogenannten Kalzinationshilfsmitteln oder Mineralisatoren in kleinen Mengen wird die Umwandlung zum $\alpha$-Aluminiumoxid und das Kristallwachstum bei der Temperaturbehandlung beschleunigt und/oder die Umwandlungstemperatur gesenkt.

Als bekannte Mineralisatoren wirksam sind in diesem Zusammenhang insbesondere NaF, $CaF_2$, $AlF_3$, $Na_3AlF_6$ und nach der EP-A-0 048 691 $X(BF_4)_n$, wobei X für Ammonium ($NH_4+$) und metallische Elemente, insbesondere 1- und 2-wertige, steht und n die formale Wertigkeit von X ist. Ferner ist es aus der FR-A-2 036 842 bekannt, dass bei der Herstellung eines natriumarmen $\alpha$-$Al_2O_3$ durch Kalzinierung des Aluminiumhydroxids eine kleine Primärkristallgrösse erhältlich ist, wenn man Ammoniumchlorid dem Aluminiumhydroxid zugibt. Insbesondere ist eine Kristallgrösse von etwa 5 μm bei einem Na-Gehalt von 0.1 % erhältlich.

Bei derartig hergestellten Tonerden ist der Habitus der einzelnen Kristalle immer plättchenförmig mit der grössten Ausdehnung senkrecht zur c-Achse.

Je nach Durchlauf- bzw. Aufheizungsgeschwindigkeit und Art und Menge der Fluorverbindungen kann die Temperatur der Umwandlung zum $\alpha$-Aluminiumoxid und dessen Kristallitgrösse und Kristallitform im beschränkten Rahmen variiert werden. Jedoch ist es bisher nicht gelungen in dieser Weise isometrische $\alpha$-$Al_2O_3$-(Korund-) Kristalle herzustellen.

Unter isometrische und die häufig verwendeten Synonyme äquiaxiale, kubische, sphärische, polyedrische etc. $Al_2O_3$-Kristalle sollen hier Kristalle verstanden werden, deren Verhältnis von Durchmesser D senkrecht zur kristallographischen c-Achse und Höhe H parallel zur c-Achse nahe bei 1 liegt.

In der kalziniertes Aluminiumoxid verarbeitenden Industrie besteht für eine Vielzahl von Anwendungsbereichen das Bedürfnis, die Nachteile dieses Rohstoffs, die durch das üblicherweise stark hervortretende Basispinakoid ("Plättchenform") des $\alpha$-Aluminiumoxidkristalls verursacht werden, in der Weise zu verändern, dass seine Eigenschaften dem eines isometrischen Materials nahekommen.

Bei der Oberflächenbearbeitung, insbesondere der Politur weicher oder spröder Werkstoffe, wie Polymere, Bunt- und Edelmetalle sowie Glas- und Halbleiterwerkstoffe, ist man häufig bemüht, jegliche in die Tiefe wirkende Beschädigungen zu vermeiden, wie sie durch scharfkantige, dünntafelige Kristalle des Bearbeitungsmaterials entstehen. Ein weiterer Nachteil derartiger Kristalle mit hohem Durchmesser- zu Höhen-Verhältnis D/H ist weiterhin, dass sie während des Einsatzes als Schleifmittel, besonders beim Läppen und Polieren, sehr leicht zerbrechen und dann Schneiden von willkürlicher Geometrie bilden. Der vermeintliche Vorteil der einkristallinen Körnung mit bei allen Kristallen konstanter Schneidengeometrie wegen der natürlichen Flächenausbildung und der hohe spezifische Schneidkantenanteil wird dadurch mindestens teilweise zunichte gemacht.

Aus diesen Gründen haben über die Kalzination von Aluminiumhydroxid hergestellte Tonerdeprodukte bisher in bestimmte Bereiche der Oberflächenfeinbearbeitungstechnik, so z.B. einige Anwendungen im Bereich der optischen Industrie, keinen Eingang gefunden.

Die Erfinder haben sich daher das Ziel gesetzt, ein $\alpha$-Aluminiumoxid durch Kalzination von Aluminiumhydroxid, $Al(OH)_3$, zu schaffen, dessen Kristalle mindestens zu 80 % im Durchmesser zu Höhen-Verhältnis D/H von maximal 2, vorzugsweise nahe 1, aufweisen, wobei die Primärkristallgrösse im Bereich von 1-10 μm, vorzugsweise im Bereich von 3-8 μm, liegen soll.

Erfindungsgemäss wird die gestellte Aufgabe durch ein Verfahren gelöst, welches sich nach dem Wortlaut des Anspruchs 1 auszeichnet. Nach einer besonderen Ausführungsform des erfindungsgemässen Verfahrens wird der ammoniumhaltige Mineralisator in einer Konzentration von 0.03-1.0 Gew.-% zum Aluminiumhydroxid zugesetzt.

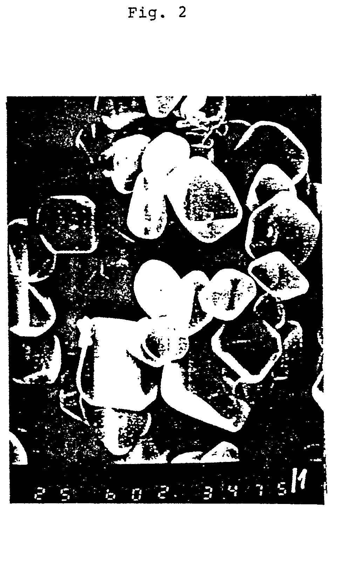

Das Produkt ist durch im wesentlichen isometrische Ausbildung der Einzelkristalle gekennzeichnet und unterscheidet sich insbesondere in seiner Morphologie durch das Hervortreten der rhomboedrischen Form von durch vergleichbare Verfahren hergestellten Aluminiumoxiden (Fig. 2).

Weitere Vorteile und Einzelheiten der Erfindung ergeben sich aus der nachfolgenden Beschreibung bevorzugter Ausführungsbeispiele sowie anhand der Zeichnung.

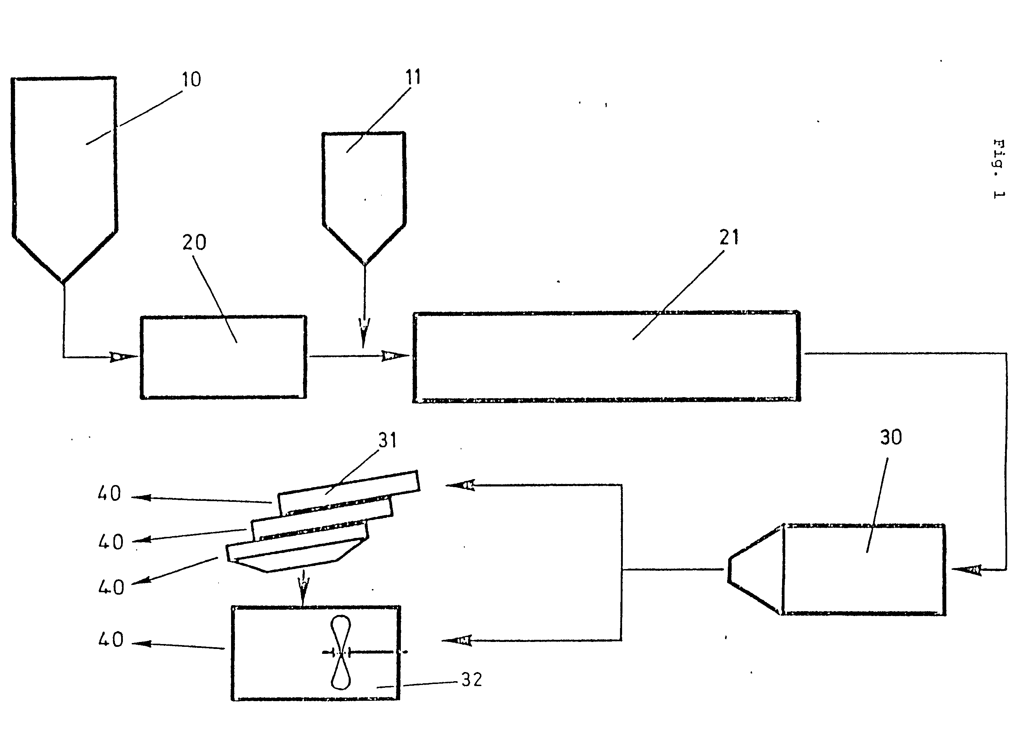

Fig. 1 zeigt schematisch eine vorteilhafte Durchführung des erfindungsgemässen Verfahrens und beispielhaft die Weiterverarbeitung des Produkts, wobei die einzelnen Verfahrensoperationen an sich bekannt sind. Das Verfahren kann ein- oder zweistufig durchgeführt werden. Bei zweistufiger Fahrweise kann der Zusatz des Mineralisators durch Vermischen mit dem vorgetrockneten Gut aus der ersten Stufe erfolgen oder auch direkt in den Ofen der zweiten Stufe gegeben werden. Bei der Zugabe des Mineralisators direkt in den Ofen kann diese im Gegenstrom und/oder in Gleichstrom durchgeführt werden, d.h. bei Verwendung eines Drehrohrofens auf der Seite der Aufgabe des Produktes aus der ersten Stufe und/oder beim Brenner.

Aluminiumhydroxid mit einem auf $Al_2O_3$ bezogenen $Na_2O$-Gehalt 0,1 % befindet sich im Silo 10, die Mineralisatorsubstanzen im Silo 11. Das Hydroxid wird beim zweistufigen Verfahren durch einen Trockner 20 geleitet und gibt dort den grössten Teil des Kristallwassers ab. Das den Trockner 20 verlassende Zwischenprodukt geht zusammen mit dem Mineralisator in den Ofen 21. Der Austrag aus dem Ofen 21 besteht aus Korundagglomeraten mit einer Kristallmorphologie der oben beschriebenen Art. Die Agglomerate werden bei Bedarf in an sich bekannter Weise wie z.B. Mahlen 30, Sieben 31, Sichten 32 desagglomeriert und in einkristalline Fraktionen 40 getrennt.

Es ist nicht von Vorteil, die Temperatur des Zwischenproduktes stark zu senken oder dieses gar in ein Zwischenlager zu geben und vollends auf Raumtemperatur abkühlen zu lassen. In solchen Fällen zeigten sich häufig milchig-trübe Kristalle im Endprodukt.

Bei direkter Zugabe der Mineralisatorsubstanz, also bei einstufiger Verfahrensführung, tritt bereits auf den ersten Metern der Ofenreise eine ausreichende Durchmischung mit dem aus dem Trockner 20 kommenden Zwischenprodukt ein; das Endprodukt war immer homogen.

Für alle nachfolgenden Ausführungsbeispiele wurde ein Drehrohrofen von 6,5 m Länge und 60 cm innerem Durchmesser verwendet.

In den Beispielen 1-4 wurden je 300 kg Ausgangmaterial genommen, und mit etwa 40 kg pro Stunde chargiert. In Beispiel 1 wurde das Material direkt in den Drehrohrofen gegeben, in den Beispielen 2-4 lief das Material erst durch den Trockner, wobei die Verweilzeit im Trockner etwa 1 Stunde, im Drehrohrofen zwischen etwa 2,5 und 4,5 Stunden betrug. Für Beispiel 1 betrug die Verweilzeit etwa 3 Stunden.

**Beispiele**

| Versuch | Kalzination | Na2-Gehalt in Al(OH)3 (als al2O3) Gew.-% | Mineralisator Verbindung | Gew.-% | Vermischen des Mineralisators in Al(OH)3 | Trockner-temp. °C | Maximal-temp. °C | Verweilzeit in 2. Stufe Stunden | Produkt Kristallit-grösse in µm 80 % | D/H $\leq$ |
|---|---|---|---|---|---|---|---|---|---|---|
| 1 | einstufig | 0.1 | NH4BF4 | 0.1 | nach Trocknen des Al(OH)3 bei 130°C | — | 1200 | 2.5 | 2 – 4 | 1.5-2 |
| 2 | zweistufig | 0.05 | NH4BF4 | 1.0 | vor Trockner | 400 | 1400 | 3.5 | 8 –10 | 1 –1.5 |
| 3 | zweistufig | 0.1 | NH4F B2O3 | 0.075 0.075 | nach Trockner | 200 | 1200 | 2.5 | 3 – 5 | 1.5-2 |
| 4 | zweistufig | 0.1 | NH4BF4 | 0.1 | nach Trockner | 200 | 1350 | 3.5 | 4 – 6 | 1 –1.5 |

Die erhaltenen Produkte (Fig. 2) bestehen aus $\alpha$-$Al_2O_3$-(Korund)-Kristallen im Bereich von 1-10 µm, wobei der grösste Teil zwischen 3-8 µm lag. Die Kristalle hatten im wesentlichen einen isometrischen Habitus und sind der Abbildung 5.8d in Elwell und Scheel, Crystal Growth from High Temperature Solutions, 1975, Seite 219 sehr ähnlich.

Die Kristalle eignen sich für Läpp- und Polierzwecke sowie für den Einsatz in der keramischen Industrie. Die Stampfdichte nach DIN 53194 des aus Versuch 5 erhaltenen und anschliessend in einer Laborvibrationsmühle desagglomerierten Materials, betrug 2'200 kg/m³. Dieser Wert liegt um etwa 40 % über dem eines handelsüblichen Tonerdeproduktes vergleichbarer Kristallitgrösse.

Bei allen Versuchen bestand das kalzinierte Endprodukt erwartungsgemäss nach röntgenographischen Untersuchungen praktisch nur aus Korund, $\alpha$-$Al_2O_3$. Die $\beta$-$Al_2O_3$-Interferenz 002 ($CuK_\alpha$, d = 11,3 war in allen Mustern nur schwach sichtbar. Ansonsten sind die Kristalle ohne Inhomogenitäten. Die $\alpha$-$Al_2O_3$-Interferenzen der Röntgendiffraktogramme waren alle scharf, was als Kennzeichen defektfreier Kristalle gewertet wird. Figur 2 zeigt ein Muster aus Versuch 2 in 6'000-facher Vergrösserung.

In der Aluminiumoxid verarbeitenden keramischen, insbesondere der oxidkeramischen Industrie und bei der Herstellung von Feuerfesterzeugnissen wird im allgemeinen die Forderung nach möglichst hochverdichtbaren Rohstoffen gestellt. Das nach dem erfindungsgemässen Verfahren hergestellte Produkt ist auch für diese Bereiche hervorragend geeignet.

## Patentansprüche

1. Verfahren zur Herstellung kristalliner Tonerde, α-Al$_2$O$_3$, durch Kalzination von Aluminiumhydroxid, Al(OH)$_3$, bis zu einer über der Umwandlung zu α-Al$_2$O$_3$ liegenden Temperatur in Anwesenheit eines ammonium(NH$_4$+)-haltigen Mineralisators unter Zugabe von bor- und/oder fluorhaltigen Verbindungen als Mineralisatoren
dadurch gekennzeichnet, dass
das Aluminiumhydroxid einen auf Al$_2$O$_3$ bezogenen Na$_2$O-Gehalt von ⩽ 0,1 Gew.-%, vorzugsweise etwa 0.05 Gew.-% aufweist.

2. Verfahren zur Herstellung kristalliner Tonerde nach Aspruch 1, dadurch gekennzeichnet, dass der ammoniumhaltige Mineralisator in eine Konzentration von 0,03 - 1,0 Gew.-% zum Aluminiumhydroxid zugesetzt wird.

## Claims

1. A method of production of crystalline alumina, α-Al$_2$O$_3$, through calcination of aluminium hydroxide, Al(OH)$_3$ up to a temperature lying above the conversion to α-Al$_2$O$_3$ in the presence of a mineralizer containing ammonium (NH$_4$+) with the addition of compounds containing boron and/or fluorine as mineralizers
characterized in that
the aluminium hydroxide exhibits a content of Na$_2$O referred to Al$_2$O$_3$ of ⩽ 0.1% by wt., preferably about 0.05% by wt.

2. A method of production of crystalline alumina, as in Claim 1, characterized in that the mineralizer containing ammonium is added in a concentration of 0.03 - 1.0% by wt. with respect to the aluminium hydroxide.

## Revendications

1. Procédé de préparation d'une alumine cristalline α-Al$_2$O$_3$ par calcination de l'hydroxyde d'aluminium Al(OH)$_3$ jusqu'à une température supérieure à la température de conversion en α-Al$_2$O$_3$ en présence d'un minéralisateur contenant de l'ammonium (NH$_4$+) avec adjonction de composés contenant du bore et/ou du fluor en tant que minéralisateurs,
caractérisé en ce que
l'hydroxyde d'aluminium a une teneur en Na$_2$O, par rapport à Al$_2$O$_3$, inférieure ou égale à 0,1% en poids et de préférence d'environ 0,05 % en poids.

2. Procédé de préparation d'une alumine cristalline selon la revendication 1, caractérisé en ce que le minéralisateur contenant de l'ammonium est ajouté à une concentration de 0,03 à 1,0 % en poids à l'hydroxyde d'aluminium.

Fig. 1

Fig. 2